# EUROPÄISCHE PATENTANMELDUNG

(11) **EP 2 332 715 A2**
(43) Veröffentlichungstag der Anmeldung: **15.06.2011**
(21) Anmeldenummer: 10194283.7
(22) Anmeldetag: 09.12.2010
(51) Int. Cl.: B29C 49/48

(54) **Blasformmaschine mit Kühleinrichtung**

(30) Priorität: 11.12.2009 DE 102009057891
(71) Anmelder: Krones AG, 93073 Neutraubling (DE)
(72) Erfinder: Albrecht, Thomas, 92339, Beilngries (DE); Blochmann, Erik, 93073, Neutraubling (DE)
(74) Vertreter: Bittner, Bernhard

(57) **Zusammenfassung**

Eine Vorrichtung (1) zum Umformen von Kunststoffvorformlingen zu Kunststoffbehältnissen mit wenigstens einer Blasform (2), innerhalb derer die Kunststoffvorformlinge zu Kunststoffbehältnissen expandierbar sind, wobei die Blasform (2) wenigstens zwei gegeneinander bewegbare Blasformteile (2a, 2b) aufweist, mit einer gegenüber der Blasform (2) beweglichen Beaufschlagungseinrichtung (4), um den Kunststoffvorformling mit einem Druck zu dessen Expansion zu beaufschlagen, wobei die Beaufschlagungseinrichtung (4) wobei wenigstens ein Bereich (22) der Blasform (2) temperierbar ist. Erfindungsgemäß weist die Vorrichtung (1) einen in seiner Gesamtheit von der Blasform (2) trennbaren Temperierkörper (10) zur Temperierung des Bereichs der Blasform (2) auf.

## Beschreibung

Die vorliegende Erfindung bezieht sich auf eine Blasformmaschine. Aus dem Stand der Technik sind derartige Blasformmaschinen bekannt. Diese dienen dazu, um Kunststoffvorformlinge insbesondere durch Beaufschlagung mit Druckluft zu Kunststoffbehältnissen zu expandieren. Dabei wird ein in der Regel erwärmter Vorformling in die entsprechende Blasform eingegeben und anschließend durch Druckluft gegen die Innenwandung dieser Blasform expandiert. Diese Kunststoffvorformlinge weisen dabei schon ein fertig hergestelltes Gewinde auf und lediglich der Boden und mittlere Bereich werden durch Beaufschlagung mit Druckluft expandiert.

Der Bereich direkt unterhalb des Gewindes ist daher ein relativ empfindlicher Bereich, insbesondere wenn die Kunststoffvorformlinge auch mittels einer Reckstange gedehnt werden. Im Stand der Technik ist es daher bekannt, dass die Blasformen Kühlungen aufweisen, um insbesondere den Hals bzw. Neckbereich des Kunststoffvorformlings während des Expansionsvorgangs zu kühlen. In der Regel weisen derartige Blasformen auch so genannte Neckplatten auf, in der im Inneren gebohrte Kühlkanäle vorhanden sind. Durch diese Kühlkanäle fließt ein Kühlmedium, welches im Arbeitsbetrieb den Hals bzw. Neckbereich des Kunststoffvorformlings kühlt.

Dabei ist die Neckplatte einschließlich dieser Kühlkanäle und der entsprechenden Kühlmittelanschlüsse an der Blasform angeordnet. Die besagten Bohrungen müssen in der heutigen Ausführungsform in die Neckplatte eingebracht werden, wodurch die Neckplatte fertigungstechnisch aufwendiger ist und nicht standardisiert werden kann. Auch müssen einige der Bohrungen anschließend wieder mit Stopfen verschlossen werden, was auch zu Undichtigkeiten führen kann. Die Neckplatte weist weiterhin wegen der Kühlbohrungsdurchmessung und der Medienanschlüsse eine relativ große Dicke auf. Auch die Geometrie dieser Bohrungen muss genau an den jeweiligen Querschnitt des Halses des Kunststoffvorformlings angepasst werden. Daneben ist diese Ausführung auch stark von den geometrischen Gegebenheiten, der Form und dem Neckdurchmesser abhängig. Dies steht einer optimalen Gestaltung entgegen.

Falls beispielsweise bei einem Garniturenwechsel die Blasformen ausgewechselt werden, ist es dazu auch erforderlich, dass die entsprechende Neckkühlung mit ausgewechselt wird. Aus diesem Grunde müssen auch die Anschlüsse mittels Kupplungen bei einem Formwechsel betätigt werden.

Aus der WO 2009/081 027 ist eine Blasform zum Herstellen von thermoplastischen Behältern und eine Blasformeinrichtung mit einer derartigen Blasform bekannt. Dabei ist eine Neckplatte vorgesehen, welche unmittelbar eine Kühlung des Kunststoffvorformlings bewirken soll, gleichzeitig jedoch mittels lsolierkörpern eine thermische Isolierung zur Blasform hin erreichen soll. Dieser Kühlkörper weist dabei einen Kühlmittelanschluss auf und ist mit der Blasform verschraubt.

Der vorliegenden Erfindung liegt daher die Aufgabe zu Grunde, derartige Blasformmaschinen insbesondere auch im Falle eines Blasformwechsels zu vereinfachen. Um diese erfindungsgemäß durch eine Vorrichtung nach Anspruch 1 erreicht. Vorteilhafte Ausführungsformen und Weiterbildungen sind Gegenstand der Unteransprüche.

Eine erfindungsgemäße Vorrichtung zum Umformen von Kunststoffvorformlingen zu Kunststoffbehältnissen weist wenigstens eine Blasform auf, innerhalb derer die Kunststoffvorformlinge zu Kunststoffbehältnissen expandierbar sind. Dabei weist die Blasform wenigstens zwei gegeneinander bewegbare Blasformteile auf, wobei insbesondere innerhalb dieser Blasformteile ein Hohlraum zum Expandieren der Kunststoffvorformlinge ausgebildet ist. Weiterhin ist eine gegenüber der Blasform bewegliche Beaufschlagungseinrichtung vorgesehen, um den Kunststoffvorformling mit einem Druck zu dessen Expansion zu beaufschlagen. Dabei ist wenigstens ein Bereich der Blasform temperierbar.

Erfindungsgemäß weist die Vorrichtung einen in seiner Gesamtheit von der Blasform trennbaren Temperierkörper zur Temperierung des besagten Bereichs der Blasform und/oder des Kunststoffvorformlings auf.

Während, wie oben beschrieben, bislang entweder in der Blasform selbst oder in einer entsprechenden an der Blasform befestigten Neckplatte Kühlmittelkanäle vorgesehen waren, welche den Haltbereich der Vorformlinge kühlen, wird nunmehr vorgeschlagen, dass ein Temperierkörper vorgesehen ist, der in selbst von der Blasform bzw. auch von einer Neckplatte trennbar ist. Auf diese Weise ist es möglich, dass die Blasformen selbst ausgewechselt werden und der besagte Temperierkörper an der Vorrichtung bzw. an einem Blasformträger verbleibt. Falls der Temperierkörper Kühlmittelanschlüsse aufweist, müssen diese nunmehr im Falle eines Blasformwechsels nicht mehr gewechselt werden. Damit sind insbesondere eine etwa vorhandene Neckplatte und der besagte Temperierkörper unterschiedliche Bauteile.

Vorzugsweise sind die Blasformteile schwenkbar bezüglich einander bzw. ist wenigstens ein Blasformteil schwenkbar bezüglich dem anderen. Vorteilhaft ist diese Schwenkbarkeit bezüglich einer Achse gegeben, die parallel zu einer Längsachse der zu expandierenden Kunststoffvorformlinge ist.

Vorteilhaft weist die Vorrichtung zum Umformen von Kunststoffvorformlingen mehrere derartige Blasformen auf, welche gemeinsam an einem Träger wie beispielsweise einem Trägerrad angeordnet sind. Dabei ist es möglich, dass eine Vielzahl von Temperierkörpern, die an den unterschiedlichen Blasformen angeordnet sind, von einem gemeinsamen Kanal mit einem Temperiermedium versorgt werden.

Bei einer weiteren vorteilhaften Ausführungsform weist die Vorrichtung Blasformträger auf, an denen die Blasformen lösbar befestigt sind. Vorteilhaft wird bei einem Lösen der Blasform von dem Blasformträger nicht auch gleichzeitig der besagte Temperierkörper gelöst, sondern verbleibt bevorzugt an dem Blasformträger bzw. in einer vorgegebenen Position bzgl. des Blasformträgers.

Unter einem Temperierkörper wird allgemein ein Körper verstanden, der ein anderes Element wie hier einen Bereich der Blasform oder einer Neckplatte temperiert, das heißt bevorzugt, zumindest lokal dessen Temperatur ändert oder auf einem bestimmten Niveau beibehält. Dabei soll eine Temperatur insbesondere auch gegenüber anderen Bereichen der Blasform geändert oder auf einem anderen Niveau gehalten werden.

Vorteilhaft handelt es sich bei dem Temperierkörper um einen Kühlkörper zum Kühlen des besagten Bereichs der Blasform. Es wäre jedoch bei anderen Anwendungen auch denkbar, dass es sich bei dem Temperierkörper um einen Erwärmungskörper handelt der beispielsweise einen zentralen Bereich der Blasform erwärmt.

Bei einer weiteren vorteilhaften Ausführungsform weist der Temperierkörper wenigstens einen Kanal für einen Temperiermedium auf. Insbesondere handelt es sich dabei um einen Kühlmittelkanal wobei einem Temperierkörper zwei Anschlüsse zur Versorgung desselben mit dem Temperiermedium vorgesehen sind. Vorteilhaft verläuft dieser Kanal vollständig innerhalb des Temperierkörpers. Weiterhin weist dieser Kanal vorteilhaft gekrümmte Bereiche auf und ist weiterhin vorteilhaft nicht durch einen Bohrvorgang erzeugt. Unter gekrümmten Bereichen werden hier in Abgrenzung von kantigen Bereichen insbesondere solche Bereiche mit einem endlichen Krümmungsradius verstanden.

Bei einer vorteilhaften Gestaltung ist der zu temperierende Bereich der Blasform ein Halsbereich der Blasform. Unter dem Halsbereich wird derjenige Bereich der Blasform verstanden, der im Bereich der Mündung eines zu expandierenden Vorformlings angeordnet ist. Insbesondere kühlt der zu temperierende Bereich der Blasform einen Bereich unmittelbar unterhalb eines Gewindes oder Tragrings eines zu expandierenden Vorformlings.

Vorteilhaft ist an wenigstens einer Blasformeinheit und bevorzugt an beiden Blasformeinheiten eine Halsplatte bzw. Neckplatte angeordnet. Diese Necklpatten können dabei mit den Blasformteilen verschraubt sein. Es wäre jedoch auch denkbar, dass die Neckplatten einteilig mit den Blasformteilen ausgebildet sind.

Vorteilhaft besteht (insbesondere in einem Arbeitsbetrieb der Vorrichtung) wenigstens zeitweise ein flächiger Kontakt zwischen dem Temperierkörper und der Blasform. Damit erfolgt hier eine Kühlung der Blasform bzw. der Neckplatte über die besagte Fläche und nicht über Kanäle. Es wird daraufhin gewiesen, dass die Neckplatte im Rahmen dieser Erfindung als Bestandteil der Blasform angesehen wird. Besonders bevorzugt handelt es sich bei dem Bereich der zu Temperieren bzw. zu Kühlen ist um die Neckplatte oder einen Teil dieser Neckplatte. Diese Neckplatte kann dabei an einen oberen Bereich der oben erwähnten Blasformteile angeordnet sein. Es wird daher ein flächiger Kontakt zwischen dem Temperierkörper und einer Oberseite der Blasform ausgebildet.

Bei einer weiteren vorteilhaften Ausführungsform ist der Temperierkörper in einem Arbeitsbetrieb der Vorrichtung, d.h. in einem Betrieb, in dem die Kunststoffvorformlinge expandiert werden gegenüber der Blasform beweglich. So wird während des eigentlichen Expansionsvorgangs der Temperierkörper an die Blasform bzw. die Neckplatte angelegt und in anderen Zeiträumen, beispielsweise wenn ein Behältnis entfernt wird, besteht vorteilhaft kein Kontakt zwischen dem Temperierkörper und der Neckplatte.

Bei einer weiteren vorteilhaften Ausführungsform ist eine Bewegung des Temperierkörpers an eine Bewegung der Beaufschlagungseinrichtung gekoppelt. So kann beispielsweise der Temperierkörper an der Beaufschlagungseinrichtung wie beispielsweise einer Blasdüse angeordnet sein und, wenn sich die Blasdüse an die Blasform bzw. den Kunststoffvorformling anlegt kann sich auch der Temperierkörper an die Neckplatte anlegen.

Bei einer weiteren vorteilhaften Ausführungsform weist die Vorrichtung eine Reckstange zum Dehnen der Kunststoffvorformlinge entlang deren Längsrichtung auf. Bei dieser Ausführungsform handelt es sich bei der Vorrichtung insbesondere um eine Streckblasmaschine. Insbesondere bei dieser Art Vorrichtungen ist eine besonders effiziente Temperierung bzw. Kühlung durch den besagten Temperierkörper möglich und besonders vorteilhaft.

Bei einer weiteren vorteilhaften Ausführungsform weist die Vorrichtung einen zweiten Temperierkörper auf der vorteilhaft in seiner Gesamtheit ebenfalls von der Blasform bzw. der Neckplatte trennbar ist. Auf diese Weise sind insbesondere beide Blasformteile mit derartigen Temperierkörpern zum Temperieren eines Neckbereichs ausgestattet. Vorteilhaft liegt dabei der zweite Temperierkörper dem ersten Temperierkörper bezüglich des Kunststoffvorformlings gegenüber. So können die beiden Temperierkörper beispielsweise symmetrisch zueinander ausgebildet sein und zwischen den Temperierkörpern kann der Kunststoffvorformling bzw. dessen Halsbereich aufgenommen werden.

Vorteilhaft sind dabei die beiden Temperierkörper gleichartig ausgebildet, was die Herstellungskosten für dieselben absenkt.

Ebenso ist es möglich, dass ein Teil der Bodenform mit einem separaten Kühlkörper in Kontakt gebracht wird. Somit ist eine gezielte Temperierung eines Bereichs des Kunststoffbehälters im Bodenabschnitt erreichbar, wie beispielsweise der sogenannte Anspritzpunktes im Zentrum, und der konzentrische Außenbereich im Behälterboden wird davon nicht beeinflusst.

Die vorliegende Erfindung ist weiterhin auf ein Verfahren zum Umformen von Kunststoffvorformlingen zu Kunststoffbehältnissen gerichtet, wobei die Kunststoffvorformlinge innerhalb eines Hohlraums, der durch wenigstens zwei gegeneinander bewegbare Blasformteile einer Blasform ausgebildet wird, durch Druckbeaufschlagung zu den Kunststoffbehältnissen umgeformt werden. Dabei wird wenigstens ein Bereich der Blasform temperiert. Erfindungsgemäß wird die Temperierung mittels eines Temperierkörpers durchgeführt, der in seiner Gesamtheit von der Blasform trennbar ist.

Weitere Vorteile und Ausführungsformen ergeben sich aus den beigefügten Zeichnungen:

Darin zeigen:
- Fig. 1: Eine schematische Darstellung einer erfindungsgemäßen Vorrichtung;
- Fig. 2: Eine perspektivische Darstellung eines oberen Bereichs einer Blasform;
- Fig. 3: Eine perspektivische Darstellung eines einzelnen Blasformteils;
- Fig. 4: Eine Außenansicht des Blasformteils aus Fig. 3;
- Fig. 5: Eine Darstellung des Blasformträgers bei herausgenommener Blasform;
- Fig. 6: Eine Rückansicht des in Fig. 5 gezeigten Blasformträgers;
- Fig. 7: Eine Darstellung des Temperierkörpers;
- Fig. 8: Eine weitere Darstellung des Temperierkörpers.

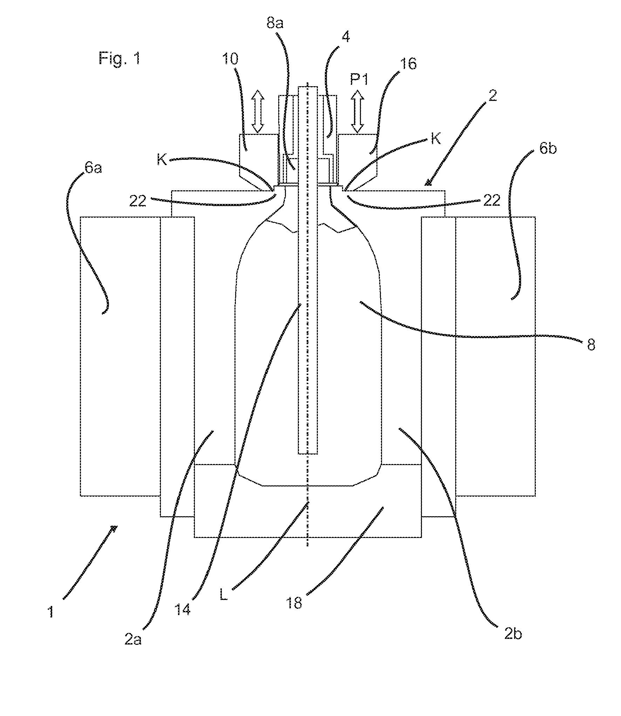

Fig. 1 zeigt eine schematische Darstellung einer erfindungsgemäßen Vorrichtung 1. Diese Vorrichtung 1 zum Expandieren von Kunststoffvorformlingen zu Kunststoffbehältnissen 8 weist dabei eine Blasform 2 auf. Diese Blasform 2 weist hier 2 Blasformteile bzw. Blasformhälften 2a, 2b, auf, die auseinander geklappt werden können, um zwischen sich Kunststoffvorformlinge aufzunehmen. Dabei ist in das in Fig. 1 gezeigte linke Blasformteil 2a bzw. die linke Blasformhälfte an einem Blasformträger bzw. einer Trägerhälfte 6a angeordnet. Das rechte Blasformteil bzw. die rechte Blasformhälfte 2b ist an einem Blasformträger 6b fest angeordnet, wobei sich im Arbeitsbetrieb die beiden Träger 6a und 6b bezüglich einer gemeinsamen Achse schwenken lassen, die parallel zu der eingezeichneten Längsachse L ist.

Das Bezugszeichen 18 bezieht sich auf eine Bodenform, die zum Expandieren der Kunststoffvorformlinge jedenfalls in einem Arbeitsbetrieb hier von unten an die beiden Blasformhälften 2a, 2b herangeführt wird. Auf diese Weise wird durch die Blasformteile 2a, 2b sowie die Bodenform 18 ein Hohlraum abgeschlossen bzw. ausgebildet, innerhalb dessen die Kunststoffvorformlinge expandiert werden.

Mittels einer Reckstange 14 wird während des Expansionsvorgangs der Kunststoffvorformling in seiner Längsrichtung L gedehnt. Das Bezugszeichen 22 bezieht sich auf den zu temperierenden Bereich der Blasform. Dies ist hier insbesondere ein Bereich, der an einem Halsbereich des Kunststoffvorformlings bzw. des Kunststoffbehältnisses 8 anliegt, oder in dessen Nähe angeordnet ist.

Das Bezugszeichen 10 kennzeichnet einen Temperierkörper und das Bezugszeichen 16 einen zweiten Temperierkörper in grob schematischer Darstellung. Diese beiden Temperierkörper 10,16 sind hier gleichartig ausgebildet und symmetrisch zueinander. In einer weiteren Ausführungsform (nicht gezeigt) könnten die beiden Temperierkörper auch einteilig ausgeführt und dabei konzentrisch um die Blasdüse angeordnet sein. Das Bezugszeichen 8a kennzeichnet einen Gewindebereich des Kunststoffvorformlings, der an einem oberen Bereich der Blasform anliegt. Das Bezugszeichen 4 bezieht sich auf eine Blasdüse, die zum Expandieren der Kunststoffvorformlinge an diese angelegt wird. Die Bewegung der Temperierkörper 10 und 16 ist hier an die Bewegungen der Blasdüse gekoppelt, das heißt die Temperierkörper 10, 16 bewegen sich ebenfalls entlang des Doppelpfeils P1 auf die jeweiligen Blasformteile 2a und 2b zu. Während der Expansion entsteht ein flächiger Kontakt K zwischen den beiden Temperierkörpern 10, 16 und den Blasformteilen 2a und 2b bzw. eine hier nicht genauer dargestellten Neckplatte, welche Bestandteil der Blasform 2 ist.

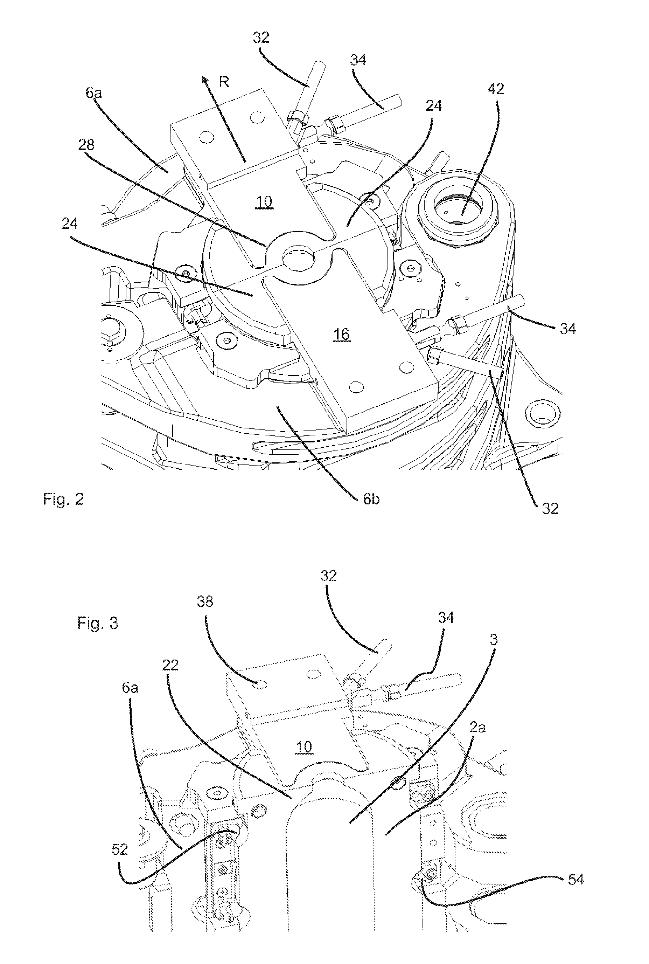

Fig. 2 zeigt eine perspektivische Darstellung eines oberen Bereichs einer erfindungsgemäßen Vorrichtung. Man erkennt hier wiederum die beiden Blasformträger 6a und 6b, an denen die beiden Blasformteile 2a, 2b angeordnet sind. Weiterhin sind zwei in ihrer Gesamtheit mit 24 gekennzeichnete Neckplatten 24 vorgesehen, an denen die beiden Temperierkörper 10 und 16 anliegen. Die Bezugszeichen 32 beziehen sich hier auf den Zulauf für ein Temperier- bzw. Kühlmedium und die Bezugszeichen 34 auf einen entsprechenden Rücklauf wobei dies jedoch auch umgekehrt ausgeführt sein kann. Das Bezugszeichen 42 bezieht sich auf eine nicht genauer dargstellte Schwenkachse, bezüglich derer die beiden Formträger 6a bzw. wenigstens einer davon schwenkbar sind, um auf diese Weise die Blasform zu öffnen.

Fig. 3 zeigt eine Darstellung einer einzelnen Blasformhälfte 2a, welche an dem ihr zugeordneten Blasformträger 6a angeordnet ist. Man erkennt hier insbesondere Verriegelungsmechanismen wie Pratzen 54 des Blasformträgers 6a, die in entsprechende Ausnehmungen 52 der Blasform eingreift um diese so zu halten. Auf diese Weise wird ein Schnelllösemechanismus zwischen der Blasformhälfte 2a und dem Blasformträger 6a erreicht.

Weiterhin erkennt man auch hier wieder den Temperierkörper 10, der in einen Bereich der Blasformhälfte 2a eingreift und so wieder den flächigen Kontakt bildet. Der flächige Kontakt wird hier bevorzugt sowohl in radialer Richtung R der Blasform als auch in der Längsrichtung L (vgl. Fig. 1 gebildet), d.h. die jeweilige Kontaktfläche kann sich sowohl senkrecht zu der Längsrichtung L erstrecken als auch in der Längsrichtung L verlaufen. Das Bezugszeichen 3 bezieht sich auf den Hohlraum, der innerhalb der Blasformhälfte 2a ausgebildet wird, um darin den Kunststoffvorformling zu expandieren. Auch wäre es möglich dass Abschnitte der Kontaktfläche schräg verlaufen.

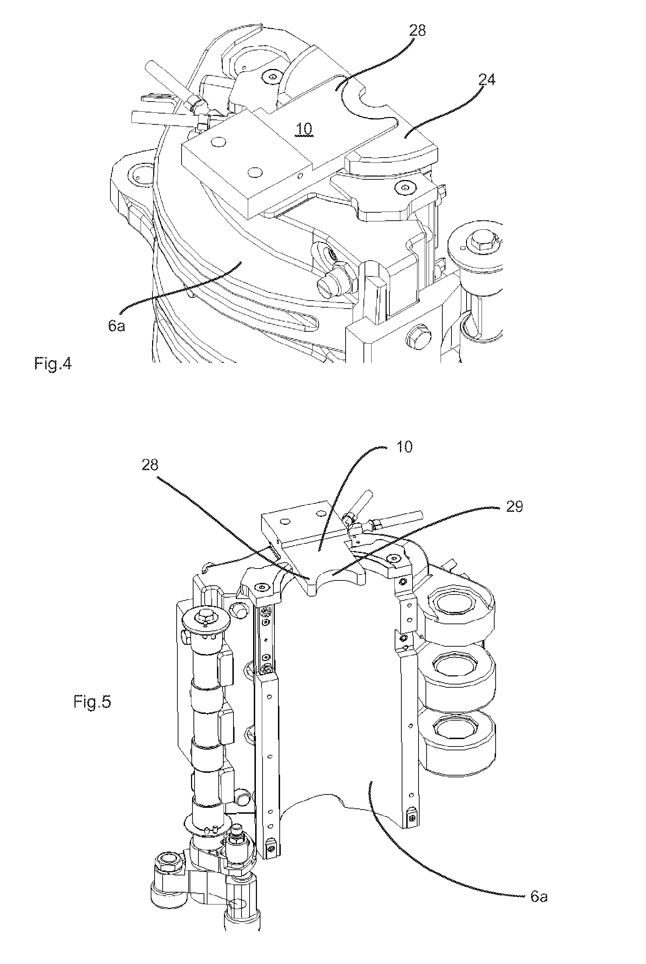

Fig. 4 zeigt eine Darstellung von hinten der in Fig. 3 gezeigten Blasformhälfte, die an einem Blasformträger angeordnet ist. Man erkennt, dass der Temperierkörper 10 hier einen halbkreisförmigen Abschnitt 28 aufweist, der an der Neckplatte 24 anliegt. Auf diese Weise wird die Fläche des Kontakts zwischen dem Temperierkörper 10 und der Neckplatte 24 in den Bereichen erhöht, in denen eine effektive Kühlung erforderlich ist.

Fig. 5 zeigt einer weitere Ausführungsform eines Blasformträgers, wobei hier die zugehörige Blasformhälfte herausgenommen ist. Man erkennt, dass der Temperierkörper 10 nicht gemeinsam mit der Blasformhälfte herausgenommen wird, sondern an dem Blasformträger 6a verbleibt. Auf diese Weise ist es auch nicht erforderlich, dass die zwei Kühlmittelanschlüsse an dem Temperierkörper 10 bei einem Wechsel der Blasform eingewechselt werden müssen. Auf diese Weise kann auch ein automatischer Wechselvorgang bezüglich der Blasformen verbessert werden, da insbesondere die aufwendigen Kühlmittelanschlüsse nicht automatisch gelöst und wieder verbunden werden müssen.

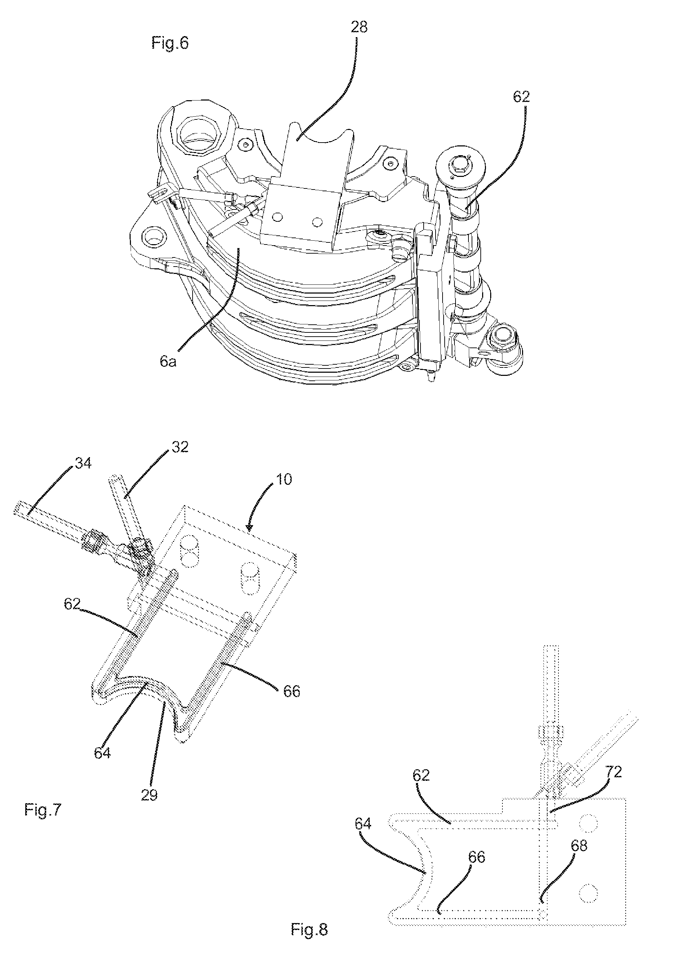

Fig. 6 zeigt eine Darstellung von hinten der in Fig. 5 gezeigten Anordnung. Man erkennt hier insbesondere auch einen Verschließmechanismus 60, der im Arbeitsbetrieb dazu dient, um den in Fig. 6 gezeigten Blasformträger 6a mit dem ihm dann gegenüberliegenden Blasformträger 6b (nicht gezeigt) zu verschließen.

Fig. 7 zeigt eine Darstellung eines Temperierkörpers 10. Man erkennt, dass der Temperierkörper in seinem Inneren einen Kühlmittelkanal aufweist, der hier Teilstücke 62, 64 und 66 besitzt. Das Teilstück 64 ist dabei ebenfalls gekrümmt ausgebildet und kann auf diese Weise effizient eine Kontaktfläche 29 kühlen. Im Stand der Technik sind diese Bereiche üblicherweise gradlinig ausgeführt, da es sich hierbei um Bohrungen handelt. Damit ist vorteilhaft wenigstens ein Abschnitt eines Kühlmittelkanals im lnneren des Temperierkörpers gekrümmt ausgebildet. Auch die im Stand der Technik teilweise erforderlichen Stopfen zum Verschließen der Kühlmittelkanäle sind bei der in Fig. 7 gezeigten Ausführung nicht notwendig.

Fig. 8 zeigt eine weitere schematische Darstellung des Temperierkörpers 10. Man erkennt hier wiederum, dass insbesondere der gekrümmte Bereich 64 sehr nahe an die Kontaktfläche 29 herangeführt kann ohne dass ein Austritt von Kühlmittel zu befürchten ist. Es wäre jedoch auch möglich, dass die Abschnitte 62, 64 und 66 je nach Bedarf hinsichtlich ihres Querschnittes auch breiter oder enger gewählt werden, als in Fig. 8 dargestellt. Vorteilhaft liegt ein Querschnitt dieser Kühlmittelkanäle zwischen 4 mm und 2 cm.

Es wäre weiterhin möglich, dass in dem Temperierkörper 10 eine Sensoreinrichtung zur Bestimmung einer (lokalen) Temperatur des Temperierkörpers 10 oder auch des Temperiermediums vorgesehen ist.

Weiterhin wäre es auch möglich, dass zwischen dem Temperierkörper 10 und der Neckplatte in anderen Bereichen ein Isolierkörper angeordnet ist, sodass nur die gerade gewollten Bereiche der Blasform gekühlt werden und ansonsten kein Wärmeübergang stattfindet. Falls gewünscht, könnte auch der Temperierkörper gegenüber bestimmten Bereichen Blasform thermisch isoliert werden, beispielsweise durch die Verwendung spezieller Isolierscheiben. So wäre es denkbar, dass der Temperierkörper zwar den Halsbereich der Kunststoffvorformlinge kühlt, jedoch nach unten hin thermisch gegenüber der Blasform isoliert ist.

Sämtliche der in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Vorrichtung
- 2: Blasform
- 3: Hohlraum
- 2a, 2b: Blasformteile, Blasformhälften
- 4: Blasdüse, Beaufschlagungseinrichtung
- 6a, 6b: Blasformträger
- 8: Kunststoffbehältnis
- 8a: Gewindebereich des Kunststoffbehältnisses
- 10: Temperierkörper
- 14: Reckstange
- 16: weiterer Temperierkörper
- 18: Bodenform
- 22: Bereich
- 24: Neckplatte
- 28: halbkreisförmiger Abschnitt
- 29: Kontaktfläche
- 32: Zulauf
- 34: Rücklauf
- 42: Schwenkachse
- 52: Ausnehmungen
- 54: Pratzen
- 60: Verschließmechanismus
- 62, 64, 66: Teilstücke des Kühlmittelkanals

- K: Kontaktfläche
- L: Längsrichtung
- P1: Doppelpfeil
- R: radiale Richtung

## Patentansprüche

1. Vorrichtung (1) zum Umformen von Kunststoffvorformlingen zu Kunststoffbehältnissen mit wenigstens einer Blasform (2), innerhalb derer die Kunststoffvorformlinge zu Kunststoffbehältnissen expandierbar sind, wobei die Blasform (2) wenigstens zwei gegeneinander bewegbare Blasformteile (2a, 2b) aufweist, mit einer gegenüber der Blasform (2) beweglichen Beaufschlagungseinrichtung (4), um den Kunststoffvorformling mit einem Druck zu dessen Expansion zu beaufschlagen, wobei die Beaufschlagungseinrichtung (4) wobei wenigstens ein Bereich der Blasform (2) temperierbar ist,
**dadurch gekennzeichnet, dass**
die Vorrichtung (1) einen in seiner Gesamtheit von der Blasform (2) trennbaren Temperierkörper (10) zur Temperierung des Bereichs der Blasform (2) aufweist.

2. Vorrichtung (1) nach Anspruch 1,
**dadurch gekennzeichnet, dass**
der Temperierkörper (10) ein Kühlkörper (10) zum Kühlen des Bereichs der Blasform ist.

3. Vorrichtung (1) nach wenigstens einem der vorangegangenen Ansprüche
**dadurch gekennzeichnet, dass**
der Temperierkörper einen Kanal (62, 64, 66) für ein Temperiermedium aufweist.

4. Vorrichtung (1) nach wenigstens einem der vorangegangenen Ansprüche
**dadurch gekennzeichnet, dass**
an wenigstens einem Blasformteil (2a, 2b) eine Halsplatte angeordnet ist

5. Vorrichtung (1) nach Anspruch 4,
**dadurch gekennzeichnet, dass**
der Temperierkörper (10) zum Temperieren der Halsplatte dient.

6. Vorrichtung (1) nach wenigstens einem der vorangegangenen Ansprüche
**dadurch gekennzeichnet, dass**
wenigstens zeitweise ein flächiger Kontakt zwischen dem Temperierkörper (10) und der Blasform (2) besteht.

7. Vorrichtung (1) nach wenigstens einem der vorangegangenen Ansprüche
**dadurch gekennzeichnet, dass**
der Temperierkörper (10) in einem Arbeitsbetrieb der Vorrichtung gegenüber der Blasform (2) beweglich ist.

8. Vorrichtung (1) nach wenigstens einem der vorangegangenen Ansprüche
**dadurch gekennzeichnet, dass**
eine Bewegung des Temperierkörpers (10) an eine Bewegung der Beaufschlagungseinrichtung (4) gekoppelt ist.

9. Vorrichtung (1) nach wenigstens einem der vorangegangenen Ansprüche
**dadurch gekennzeichnet, dass**
die Vorrichtung einen zweiten Temperierkörper (16) aufweist, der in seiner Gesamtheit von der Blasform (2) trennbar ist.

10. Verfahren zum Umformen von Kunststoffvorformlingen zu Kunststoffbehältnissen, wobei die Kunststoffvorformlinge innerhalb eines Hohlraums, der durch wenigstens zwei gegeneinander bewegbare Blasformteile (2a, 2b) einer Blasform (2) ausgebildet wird durch Druckbeaufschlagung zu den Kunststoffbehältnissen umgeformt werden, wobei wenigstens ein Bereich der Blasform (2) temperiert wird,
**dadurch gekennzeichnet, dass**
die Temperierung mittels eines Temperierkörpers (10) durchgeführt wird, der in seiner Gesamtheit von der Blasform trennbar ist.
